# EUROPEAN PATENT SPECIFICATION

(11) **EP 4 266 877 B1**
(45) Date of publication and mention of the grant of the patent: **01.04.2026**
(21) Application number: 21843894.3
(22) Date of filing: 17.12.2021
(51) Int. Cl.: A01K 61/13, A01K 61/60, A01K 75/00

(54) **AQUACULTURE SYSTEM**
AQUAKULTURSYSTEM
SYSTÈME D'AQUACULTURE

(30) Priority: 24.12.2020 GB 202020631
(43) Date of publication of application: 01.11.2023
(73) Proprietor: Salar Pursuits Limited, Kings Hill West Malling Kent ME19 4DH (GB)
(72) Inventor: BETT, Andrew, Old Manse Fern Forfar DD8 3QW (GB)
(74) Representative: Ellis, Michael James
(86) International application number: PCT/EP2021/086675
(87) International publication number: WO 2022/136199

(56) References cited:
- WO-A1-2019/245385
- WO-A1-2020/053311
- WO-A1-2020/254696
- JP-A- S 526 696
- NO-B1- 342 094
- US-A1- 2015 000 606
- US-A1- 2020 068 887

## Description

### FIELD OF THE INVENTION

This invention relates generally to the field of aquaculture and more particularly to cultivation of fish in marine environments where cultivated fish may become exposed to copepod or sea lice parasite attack or ar susceptible to other agents such as algae or jellyfish within the confines of cultivation cages. More particularly the invention relates to a fish cultivation system and filtration screen assembly therefor for inhibition of ingress of sea lice larvae, other marine copepods, jellyfish and algae into fish cultivation cages, to a method of screening a fish cultivation enclosure and to a method of cultivating fish.

### BACKGROUND OF THE INVENTION

The aquaculture fin fish industry is an important provider of certain species of fish, such as Atlantic Salmon which are cultivated in cages submerged in an offshore marine environment. Ectoparasitic copepods such as sea lice that occur naturally around the world are pathogenic to salmonid species and are attracted to the unnaturally high density of salmon populations retained in multi-cage cultivation. In this environment, large numbers of sea lice can quickly cause severe skin damage and consequent high mortality among fish populations. The cost involved in monitoring protecting and treating cultivated fish from sea lice is a significant element of the cost of fish farm cultivation.

Previous methods to reduce the impact on these parasite attacks involved removal of the fish for treatment in pesticide wash tanks. In recent years environmental concerns over the use of certain pesticides has reduced pesticide use and encouraged other methods. One such method is the use of parasite eating cleaner fish such as Wrasse and lumpfish which are introduced into the cage along with the cultivation fish where they act to remove and consume the ectoparasite sea lice in a natural manner. Currently, such small parasite eating fish have a high mortality rate when introduced into the unnatural environment of cultivation cages and therefore the efficiency of parasite removal reduces and the risk of parasite damage increases throughout the fish cultivation season. Further, there are some concerns over the effect on overfishing of Wrasse and the like due to the high mortality rate.

Another, more passive, solution has been to propose the use of a skirt to inhibit to the transport of lice or lice larvae into the cage through barrier means.

In GB-A-2517588, there is described a fine meshed fluid-permeable net for protecting fish farm cages against sea lice and meroplankton while at the same time maintaining oxygen supply and preventing harmful fouling on the net line. This entails enveloping the farm cage with the fine mesh fluid permeable net which extends down 5 to 15 m. The mesh width is stated as being from 100 µm to 1000 µm and typically 350 µm, where it is assumed this mesh will stop free-living stages of salmon lice.

Another passive solution is defined in IN-B-301282, which describes a strong lightweight anti-fouling flexible woven fabric which has a mismatch of warp and weft yarn denier (linear mass density). It refers to a fabric made with the yarn for use around aquaculture cages or a full farm site, for the purpose of blocking harmful pests, parasites, organisms and animals from entering into the cage/farm. It describes a warp yarn comprises 500 denier HDPE monofilament yarn, which is hydrophobic, while the weft direction yarn comprises a 1000 denier polyester multifilament hydrophilic yarn. However, such woven fabrics are heavy, offer only limited porosity and are difficult to clean.

Further problems arise from ingress of micro-jellyfish (e.g. *Dipleurosoma typicum)* into aquaculture cages in large numbers which can cause mass killing events.

US 2015/000606 A1, JP S52 6696 A and WO 2019/245385 A1 disclose each a fish cultivation system comprising a fish cultivation enclosure structure and a filtration screen enclosure having a filtration element.

The inventor has devised systems for addressing the shortcomings of existing methods.

### PROBLEM TO BE SOLVED BY THE INVENTION

There is a need for improvements in protection of fish cultivated in marine cages and subject to attack by naturally occurring parasitic copepods.

There is a need for improvements in protection of fish cultivated in marine cages and subject to attack by naturally occurring micro-jellyfish, algal blooms and other hazards.

It is an object of this invention to provide a screen assembly or enclosure for a fish cultivation system which inhibits ingress of marine copepods and other parasites and pests.

It is a further object of the invention to provide a fish cultivation system in which an enclosure or cage incorporates a screen to inhibit ingress of sea lice larvae and/or micro-jellyfish.

### SUMMARY OF THE INVENTION

In accordance with a first aspect of the invention, there is provided a fish cultivation system as defined in claim 1.

In a second aspect of the invention, there is provided a filtration screen enclosure for a fish cultivation system, as defined in claim 11.

In a third aspect of the invention, there is provided a method of screening a fish cultivation enclosure, as defined in claim 13.

In a fourth aspect of the invention, there is provided a method of cultivating fish, as defined in claim 14.

Preferred embodiments are disclosed in the appended claims.

### ADVANTAGES OF THE INVENTION

The fish cultivation system of the invention having a fish cultivation enclosure or cage comprising a filtration screen enclosure inhibits the passage of sea lice larvae into fish cultivation cages and therefore prevents infestation of cultivation fish with sea lice, while at the same time allowing the passage of water into the cultivation cages to maintain oxygenation of the water in the cage.

### BRIEF DESCRIPTION OF THE DRAWINGS

Figure 1 is a schematic illustration of a fish cultivation system of one embodiment of the present invention;
Figure 2 is a close up of a portion of a filtration screen enclosure for use in the system of Figure 1 showing a join structure;
Figure 3 is a close up of a portion of a filtration screen enclosure for use in the system of Figure 1 showing an alternative join structure;
Figure 4 is a photograph of a test fish cultivation system of the invention for use in Example 4;
Figure 5a is a schematic illustration of a fish cultivation system of another aspect of the present invention;
Figure 5b is a schematic illustration of a filtered, reduced temperature water replenishment system for use in the fish cultivation system of Figure 5a, according to an embodiment of the invention;
Figure 6 is a schematic illustration of a further embodiment of the filtration screen assembly of the present invention;
Figure 7 is a schematic illustration of a fish cultivation system of a further embodiment of the invention; and
Figure 8 is a schematic illustration of a fish cultivation system of another aspect of the invention.

### DETAILED DESCRIPTION OF THE INVENTION

The present invention is directed to a fish cultivation system, to a filtration screen enclosure for use in the fish cultivation system, to a method of screening a fish cultivation volume and to a method of cultivating fish.

The fish cultivation system defines a fish cultivation volume being the volume within the system that may be occupied by the fish being cultivated. The system comprises a fish cultivation enclosure structure and, disposed in relation to the enclosure structure, a filtration screen enclosure that entirely envelopes or encases, in the sub-surface, the fish cultivation volume. The filtration screen enclosure comprises a filtration element having a pore size of up to 300 µm so as to inhibit or prevent ingress of marine copepods, such as sea lice, and/or marine parasites or pests into the fish cultivation volume.

There are three general embodiments.

The filtration screen enclosure is discrete and separated from the fish cultivation enclosure structure. In one embodiment, according to this general embodiment, the filtration screen enclosure is disposed exterior of the fish cultivation enclosure structure whereby the fish cultivation enclosure structure encloses and defines the fish cultivation volume. In a second, preferred embodiment, the filtration screen enclosure is disposed to the interior of the fish cultivation enclosure structure, whereby the filtration screen enclosure defines the fish cultivation volume.

In a second general embodiment, the fish cultivation enclosure structure and the filtration screen enclosure cooperate whereby the fish cultivation enclosure structure is at least partially laminar with filtration screen enclosure and optionally forms a supporting element thereof.

In a third general embodiment, the fish cultivation enclosure structure and the filtration screen enclosure are one and the same. That is, there is a single enclosure.

The filtration screen enclosure and system incorporating, according to the invention, it is particularly effective in the screening of the larvae of marine copepods of the order siphonostomatoida, family Caligidae, especially of the genus *Caligus* and *Lepeoptheirus* (which together will be referred to generally as sea lice herein). It may particularly be effective in screening *Caligus rogercresseyi* and *Lepeophtheirus salmonis.* It is particularly concerned with Atlantic *L. salmonis.*

As well as acting as a screen for sea lice larvae, a system according to the present invention may be effective in screening of other species such as jellyfish, including micro jellyfish. In these embodiments, they may preferably be effective in screening *Dipleurosoma typicum* and mauve stingers. Further, unconsumed feed and particulates containing medicines, as well as fish faeces may be prevented from egress from the fish cultivation enclosure, thus reducing environmental impact of sea fish cultivation. Instead, such materials may be directed to a base and periodically removed (e.g. via a pump) or directed into a container or basket disposed at the base of the filtration screen enclosure.

Preferably, the filtration screen enclosure is configured to extend by a distance above the normal surface of the water so that waves do not cause water to advance over the upper edge of the screen and risk ingress of sea lice larvae. Preferably, the filtration screen enclosure is configured to extend above the water by at least 50 cm above normal sea level and more preferably at least 1 m and typically up to 1.5 m.

The filtration screen enclosure comprises a filtration element having a pore size of up to 300 µm, preferably up to 200 µm and more preferably up to 175 µm, to inhibit ingress of jellyfish and/or the larvae of marine copepods into a fish cultivation volume. The filtration element has a pore size of least 40 µm, more preferably at least 50 µm, more preferably at least 75 µm, still more preferably at least 80 µm, still more preferably at least 105 µm and more preferably at least 125 µm, ideally in the range 135 µm to 160 µm and most preferably about 150 µm. A range of 125 µm to 175 µm is, it is believed preferable in order to minimise or negate the risk of sea lice larvae entering the fish cultivation volume and attaching to fish, while maintaining or allowing sufficient flow whereby a required level of dissolved oxygen at typical stock densities can be maintained and/or the level of additional oxygen or oxygenated water required to be added may be minimized. A range of 75 µm or 80 µm to 175 µm is considered to be optimal, according to one embodiemnt, in terms of sea lice larvae ingress prevention covering a range of sea lice species.

Preferably, the filtration element is a woven mesh. More preferably, the filtration element is a woven mesh of synthetic fibres such as nylon (e.g. Nylon 6), polyester or polypropylene, more preferably nylon.

Preferably the filtration element is a square mesh.

The filtration element preferably has a warp and weft of a density within 25% of each other, more preferably within 10% and most preferably of identical density, which may be, for example, from 80 to 150 threads per inch.

In one embodiment, the filtration element may have a weight of 1.5 to 3 ounces per square yard.

Preferably, the filtration element has an open area of at least 30%, e.g. in the range 30 to 45%, e.g. from 33 to 40%.

According to a preferred embodiment, a filtration element comprises a plurality of filtration strip members which may be sewn together to form the filtration element. The filtration strip members comprise the material of the filtration element, typically in elongate strips. They may be arranged in any suitable orientation to form the filtration element, such as in a perimeter arrangement defining a stack of cylindrical members and/or truncated inverted conical members (i.e. horizontal in use). Alternatively, they may be arranged in a vertical configuration so that a plurality of strips arranged side-by-side can be sewn together to form the filtration element in a cylindrical and/or truncated inverted conical shape or similar. In a still further alternative, the elongate strips may be disposed at an angle to the vertical and horizontal and sewn together in a diagonal arrangement (in the resulting enclosure).

The joins between adjacent strips of filtration member preferably comprises an overlap of the adjacent strips of filtration member optionally in combination with a relatively narrow strip (e.g. corresponding to the extent of the overlap of the elongate strips) of a structurally reinforcing material. Preferably two, or more preferably three strips of structurally reinforcing material are provided, one disposed between (i.e. interleaving) the two overlapping portions of the elongate filtration strip members, and one disposed on either side of the overlapping portion. In one embodiment, the three strips of structurally reinforcing material are provided by a single reinforcing element bi-folded to provide the interleaving strip of reinforcing material and the strip on each side.

In another embodiment, the edges of the elongate strips of filtration material are folded over at the overlapping portion. Optionally they are folded inwards, toward one another, whereby they may be arranged to interleave or not. Alternatively, they are folded outward, away from each other (or may be one toward and one away). Preferably, a strip of structurally reinforcing material is provided on each side of the folded overlapping portions.

The structurally reinforcing material will typically be more robust that the filtration strip members and typically less porous. Optionally, the structurally reinforcing material is non-porous. The structurally reinforcing material may be woven or non-woven, but preferably comprises woven material, e.g. a laminate material optionally of woven and non-woven material. **In** one embodiment, the structurally reinforcing material is tarpaulin.

By providing a structurally reinforcing material, such as tarpaulin at the joins between strips of elongate filtration members, the resulting filtration element is made more robust and stronger, while still maintaining its filtration function and allowing through flow of water and maintaining oxygenation in the cultivation volume.

The overlapping portion (and width of structurally reinforcing material) are preferably independently in the range from 2 to 30 cm, preferably 3 to 15 cm and more preferably 4 to 10 cm, e.g. up to 8 cm.

The elongate strips of filtration material are preferably provided in strips of from 1 m to 3 m, preferably 1.5 to 2.5 m and in one particular embodiment around 1.8 m (e.g. in the range 1.7 to 2m).

The filtration screen enclosure may typically have a shape that is cylindrical or conical or comprise a portion that is cylindrical and a portion that is frustoconical. The filtration screen enclosure may consist of porous material or may comprise a filtration screen portion and optionally have a non-porous base, such as of tarpaulin.

In one embodiment, the filtration screen enclosure is formed of a porous portion with a non-porous, e.g. tarpaulin, base which base comprises a base member and base rim member extending upward from the base member to define an open cylinder or basin. In this embodiment, the base member has a diameter approximating to the surface diameter of the filtration screen enclosure, or slightly less. The base rim member preferably extends upward from the base member by about 1 to 3 m, preferably 1.5 to 2.5 m. According to this embodiment, the base rim member may comprise ringlets for affixing lifting ropes to. Thus, the basin may be winched slowly up toward the surface with the fish in the cultivation volume being concentrated in the basin when the top of the rim member reaches the surface. In this scenario, the water in the basin is isolated from the surrounding sea. Chemical or other treatments may then be applied to the cultivated fish and pumped out once complete (being replaced with fresh sea water, which prevents the exposure of surrounding waters to the chemical and other treatments. The basin may then be lowered back to its normal position. Optionally, the base member or base rim may be formed of rigid rather than flexible material, but flexible is preferred.

The filtration screen enclosure may take any suitable form.

According to the first or third general embodiments, the filtration screen enclosure may comprise, as a single layer, a a filtration element (optionally with a non-porous base or basin member), that is the filtration screen enclosure may consist of the filtration element, optionally with a base (that may be porous or non-porous).

According to any of the general embodiments, the filtration screen enclosure may comprise a filtration element and at least one porous reinforcing (or structural supporting) element with an average pore size of greater than the filtration element disposed on or in relation to one side of the filtration element or may have two porous reinforcing elements (or structural supporting elements), one disposed on each side of the filtration element so as to sandwich it.

The one or more porous reinforcing elements preferably have a pore size of at least 500 µm and preferably at least 1 mm, more preferably in the range 2.5 mm to 10 cm, more preferably 0.5 mm to 5 cm, e.g. from 1 to 10 cm. Still more preferably, the pore size of the porous reinforcing element, is a square mesh of 1 to 3 cm, preferably about 2 cm.

Preferably the or each porous reinforcing element is disposed adjacent to and in laminar arrangement with the filtration element. The porous reinforcing element may cooperate entirely with the filtration element or may cooperate or overlap at least 75% of the area of the filtration element, more preferably at least 90% and still more preferably at least 95%.

Preferably, the filtration screen assembly comprises at least two reinforcing elements, a first, outer, reinforcing element and a second, inner, reinforcing element (which may be the same or different).

In one embodiment of the first general embodiment, the or each porous reinforcing element is discrete from the fish cultivation enclosure structure.

In another embodiment of the second or third general embodiments, one porous reinforcing element is integral with or comprises the fish cultivation enclosure structure. In a particular embodiment, the fish cultivation enclosure structure is formed of the filtration screen assembly, in which case an inner or preferably an outer porous reinforcing element is a knotted or unknotted mesh net (e.g. of polypropylene), such as that typically used in salmon cages. Thus, in this embodiment, it is preferred that the fish cultivation enclosure structure comprises an enclosure net and wherein at least a portion of the enclosure net is configured to be one of the porous reinforcing elements of the filtration screen assembly.

The reinforcement elements may take any suitable form. For example, they may independently optionally comprise synthetic woven or unwoven meshes, may optionally have a self-supporting stiffness, may optionally comprise nets (e.g. of polypropylene) typically used in fish farms, may optionally comprise a porous woven fabric such as that defined in IN-B-301282 (the disclosure of which is incorporated herein by reference for this purpose).

In one particular embodiment of the invention, the filtration screen enclosure comprises two or more filtration elements together and the pair of filtration elements sandwiched or interleaved by a pair of porous structural supporting or reinforcing elements. Optionally, the enclosure comprises two outer reinforcing elements, two filtration elements and between the two filtration elements, a central reinforcing element for additional robustness. The reinforcing elements having an average pore size of greater than the filtration element.

According to the first general embodiment, the screening of sea lice larvae to inhibit ingress into fish cultivation volumes defined by fish cultivation enclosures may be achieved by providing the filtration screen enclosure and disposing it about a full perimeter of the enclosure structure. The filtration screen enclosure may be disposed to the exterior of the enclosure structure or to the interior of the enclosure structure. In a preferred embodiment, the filtration screen enclosure is disposed to the interior of the fish cultivation enclosure. This is particularly applicable for sea lice larvae screening. In one particular embodiment, the filtration screen enclosure is disposed to the interior of the fish cultivation enclosure, which itself may be a conventional salmon cage, for example. The filtration screen enclosure may be secured to the fish cultivation enclosure at key points, for example, at the rim (e.g. to a HDPE pipe) and at a depth of 8 to 10m (e.g. via an internal circumferential element disposed in the filtration screen assembly envelope). Preferably, the filtration screen enclosure may extend to a depth of up to 15 m, preferably from 10 to 12 m. Such a filtration screen enclosure may be useful in retrofitting to existing fish cultivation systems (e.g. salmon farm cages) by disposing the filtration screen enclosure into the fish cultivation volume and securing it to the fish cultivation system (e.g. the enclosure structure) at key points, ideally at the top (e.g. rim) and bottom of the cage.

The fish cultivation system as described herein is particularly suitable for the cultivation of salmon.

**In** embodiments of the invention and aspects thereof described above, especially in which filtration screen enclosure (e.g. a discrete internal enclosure or envelope or as part of the primary enclosure structure), it is preferred that the system is provided a source of fresh, oxygenated and cold sea water. Thus, it is a further aspect (and preferred embodiment of the above) that a fish cultivation system comprises a fish cultivation enclosure structure defining a fish cultivation volume, the fish cultivation enclosure structure comprising a porous mesh or net; and a water-pumping system for pumping water into the fish cultivation volume.

Without being bound by theory, it is believed that water flow into and out of an aquaculture system enclosure and resultant oxygenation of the water in an aquaculture system as defined above may be effective, particularly in tidal flows and especially when the filtration element mesh size is toward the higher end of the range (e.g. approaching 200 µm and even approaching 150 µm) and depending upon the depth of the c containment by the filtration screen enclosure. However, it may be the case that, especially for smaller mesh size filtration elements or where the filtration assembly forms a relatively shallow enclosure structure (or in any case where enhanced oxygenation or cooling are required), that supplemental oxygenation may be required. Thus, preferably, the system is provided with a water-pumping system.

The water pumping system comprises of at least one, preferably more than one (and most preferably two) oxygenated water supply pipes for supplying oxygenated sea water to the enclosure. By oxygenated, it need not necessarily mean that oxygen has been added, but instead that seawater is sourced from outside the aquaculture enclosure where oxygen may be depleted due to insufficient inflow. The water supply pipes may be configured to deliver sea water from external to the aquaculture enclosure to within the aquaculture enclosure, either by disposing the fresh sea water into the top of the aquaculture enclosure, or via outlets disposed at a depth of up to 8 m, preferably from 1 to 6 m, more preferably from 2 to 4 m within the enclosure. Preferably, especially where two or more outlets are provided, they are configured such as to provide a degree of circulation of water in the enclosure, either clockwise or counterclockwise, for example.

The water pumped into the enclosures will serve to increase the oxygen level within the enclosure, which may be depleted by reduced tidal flow through the cage and may serve to lower the temperature (by taking cooler water from a greater depth) which may be to the benefit of the fish.

The supply pipes may be supplied with water from a depth of at least 5 m, e.g. up to 15 m, but more typically up to about 10 m, such as 6 to 8 m, via a pump or pumping arrangement.

The water supplied to the enclosure volume is preferably subject to filtration (e.g. to ensure no sea-lice larvae, micro-jellyfish or even algae are allowed to enter the volume via the pumps), e.g. by passing the water through filter members which preferably have a mesh or pore size similar to the filtration element of the filtration assembly (e.g. up to 200 µm, and preferably about 100 µm). The filter members are preferably disposed in relation to the pumps.

Optionally, the pumps may be provided on a surface vessel (e.g. a feed barge), on pontoons attached to the aquaculture system enclosure or the like and served by water collection pipes extending to a depth beneath the surface (outside of the enclosure). Alternatively, the pumps are sub-surface pumps which may, for example, be fixed by stanchions or other securing or mooring arrangement to the aquaculture cage.

Depending upon the size and volume of the enclosure, the pumps may be configured to deliver any suitable volume, such as up to a cumulative 50,000 litres of sea water per minute to the aquaculture enclosure, preferably at least a cumulative 5000 litres per minute. Preferably, each pump is configured to deliver from 5000 to 15,000 litres per minute and more preferably around 10,000 litres per minute. Preferably, especially in an enclosure with a diameter around 50 m and a depth of from 8 to 16 m, the system is configured to deliver a cumulative 15,000 to 25,000 litres per minute to the enclosure.

The systems of the present invention are applicable to aquaculture systems of any size, from 25 m to 150 m diameter, for example, but preferably up to 110 m diameter, e.g. up to 75 m diameter and for example in the range 40 to 60 m diameter. In the specific description below, reference is made to cages having a 50 m diameter, but it should be understood that the invention is applicable to aquaculture cages of any suitable size.

In one embodiment of the invention according to the third general embodiment, the system of the invention comprises as the structural enclosure a filtration enclosure as defined above, thereby forming a complete enclosure, is provided with a water pumping system as defined above and is configured to have a depth of up to 10 m, more preferably from 6 to 8 m and preferably has a waste collection arrangement.

The fish cultivation systems as described herein (which may otherwise be referred to as aquaculture cages) may typically comprises the fish cultivation structure being a net (or comprising a filtration screen enclosure) disposed in relation to a frame arrangement. The frame arrangement may be any suitable frame arrangement and any of many types used in aquaculture, especially sea water aquaculture, such as in salmon farming. One common frame arrangement utilizes a frame of HDPE pipes in a circular arrangement, with for example at least a pair of floating pipes and a handrail provided in connection with one another and typically a walkway disposed over the floating pipes.

There may be used in relation to any of the embodiments described herein, particularly embodiments in which a filtration element is used within a primary enclosure structure or immediately adjacent such an enclosure structure, and in particular to filtration screen assemblies that are disposed on the interior of the primary structural enclosure, form the or a portion of the primary structural enclosure or form a discrete filtration screen assembly envelope as discussed above, a further system and method for cleaning the filtration screen assembly. In one embodiment, the filtration screen assembly may be periodically lifted from the water to enable power hosing to remove detritus. Alternatively, divers may descend to use power hoses underwater to clean material from the filtration screen assembly. In a further alternative embodiment, a robotic cleaning device may be provided to move around the interior of the enclosure to clean the filtration screen assembly, the robotic cleaning device preferably comprising a high pressure water cleaning mechanism.

The invention will now be described in more detail, without limitation, with reference to the accompanying Figures.

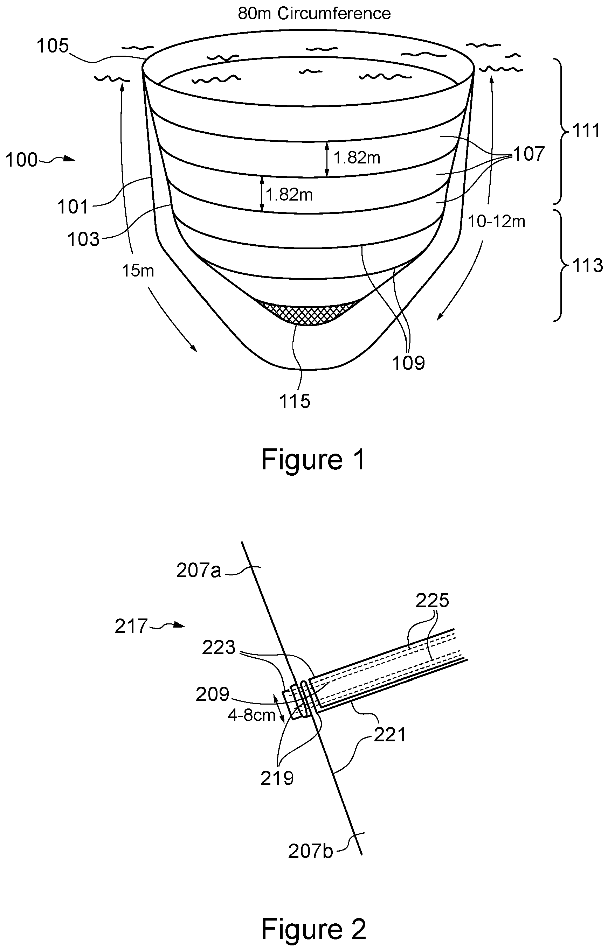

In Figure 1, a salmon cultivation system 100 has a salmon cultivation cage 101 of depth 15 m and 80 m circumference and disposed to the interior thereof (and secured thereto) a filtration screen enclosure 103 of 80 m circumference and 10 to 12 m depth, both suspended from a floating perimeter pipe 105 at an upper portion of the cage 101.

The filtration screen enclosure 103 is formed of a filtration element comprising a series of 1.82 m filtration material strips 107 of 150 µm nylon mesh, which are arranged to form the perimeter of the filtration screen enclosure 103 and are joined at their edges by sewing using tarpaulin tape sewn joins 109. The filtration screen enclosure 103 has a cylindrical upper portion 111 and an inverted frustoconical lower portion 113 with a tarpaulin base 115

In Figure 2, a close up of the filtration element 217 comprising a first filtration material strip 207a and a second filtration material strip 207b, each of 150 µm pore nylon mesh. Tarpaulin tape-sewn joint 209 comprises a folded side portion 219 of each filtration material strip 207a,207b, each having a heat-sealed edge 221. Two tarpaulin strips 223 of 4-8 cm width are provided, to match the folded side portions 210, one on each face, and are sewn with a double sewn pattern 225 for robustness.

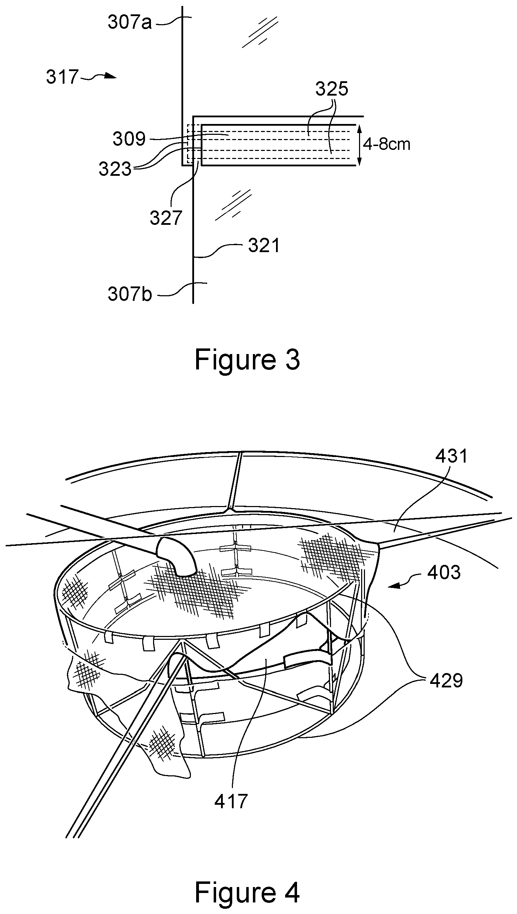

In Figure 3, a close up of the filtration element 317 comprising a first filtration material strip 307a and a second filtration material strip 307b, each of 150 µm pore nylon mesh. Tarpaulin tape-sewn joint 309 comprises overlapping portions 327 of each filtration material strip 307a,307b, each having a heat-sealed edge 321. Two tarpaulin strips 323 of 4-8 cm width are provided, to match the overlapping portions 327, one on each face, and are sewn with a double sewn pattern 325 for robustness.

In Figure 4, an enclosure 403 (approx. 130 cm diameter x 65 cm deep) has a stainless steel frame 429 and a 150 µm mesh element 417 providing the enclosure. The enclosure was suspended in a 3 meter diameter, 5500 L capacity, GRP tank 431 and stocked to a density of approximately 15 kg / m3 with twenty Atlantic salmon averaging 370 g each. This was used in Example 4 below.

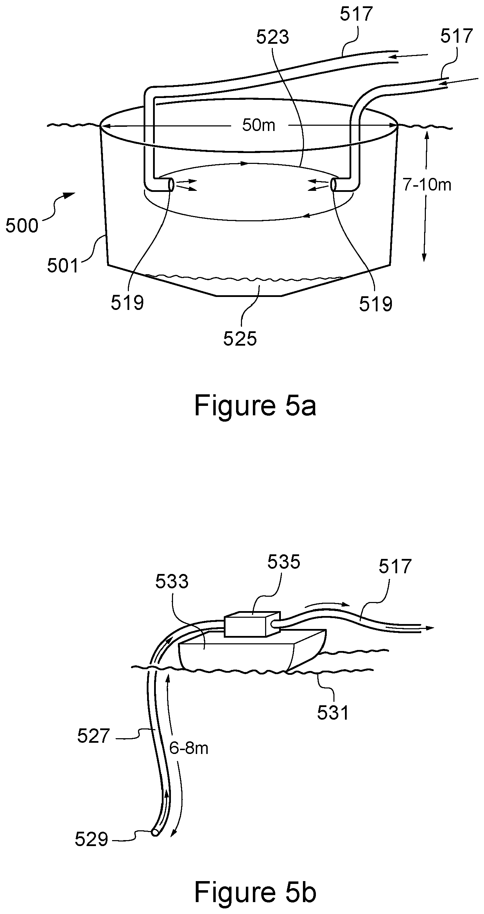

In Figure 5a, a fin fish (e.g. salmon) cultivation cage 500 of another embodiment comprises an enclosure 501 formed of a filtration screen enclosure (for inhibiting ingress of marine copepods, such as sea lice, and/or marine parasites or pests into the fish cultivation volume) comprising a filtration element having a pore size of up to 200 µm (or optionally up to 100 µm making it also effective in inhibiting ingress of algal blooms) and optionally two supporting structures provided on each side of the filtration element, comprising a porous reinforcing element with an average pore size of greater than the filtration element. In this embodiment, the filtration screen assembly forms a full enclosure. The cage 500 has a depth of 7 to 10 m and 50 m diameter. Since flow of water into and out of the enclosure 501 may be reduced due to the pore sized of the mesh, a fresh supply of cold, oxygenated and preferably filtered sea water may be supplied to the cultivation volume via two oxygenated water supply pipes 517 sourcing water via pumps from say a 6 to 15 m depth outside of the aquaculture cage (see Figure 5b). The outlets 519 of the supply pipes 517 may be disposed at a depth of say 2 to 5 m within the enclosure 501 and configured to cause a circulatory movement or flow within the enclosure, which is beneficial to the fish. This helps to increase oxygen levels within the enclosure and also serves to reduce the water temperature in the enclosure. Water may flow out of the enclosure through the pores in the filtration screen assembly. Waste 525, including faeces, unused feed, etc, may collect at the base of the enclosure, with smaller particles of waste able to exit through the pores. The waste may be removed by pumping it out from the base of the enclosure periodically and may be processed (e.g. heat treated or desalinated) for further use, e.g. as an agricultural fertilizer, or may be disposed of. This has an environmental benefit in that it reduces the pollution to the surrounding environment caused by the waste from the aquaculture cage.

In Figure 5b, the water supply pipe 517 is shown extending from a water pump 535 disposed on a feed barge 533 which is located nearby the cage 500. A water collection pipe 527 is provided to the water pump 535 and extends into the water such that the collection pipe inlet 529 is at a depth of 6 to 8 m below the water surface 531 in order to collect oxygenated, cold water for use. The water is passed through a filter of up to 200 µm, preferably of about 100 µm pore size/mesh, in order to ensure that sea lice larvae (and other pests such as micro-jellyfish) are not introduced into the aquaculture cage via the pump. The filter can be located at any suitable place, such as the inlet 529 or in or at either side of pump 535.

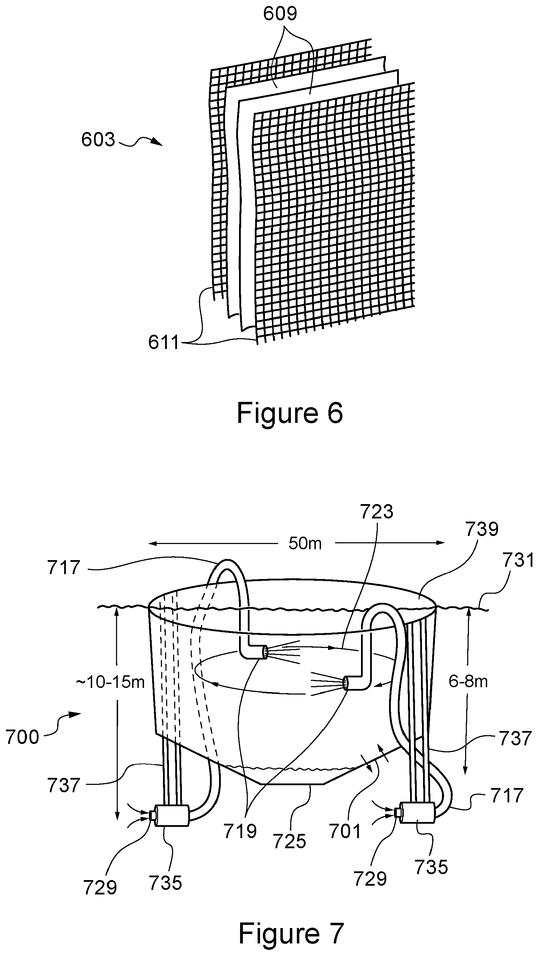

In Figure 6, a further embodiment of the filtration screen enclosure 603 is illustrated, in which two layers of a filtration element 609, e.g. of 125 or 150 µm mesh size woven Nylon mesh, is provided and disposed between two layers of reinforcing mesh 611. The reinforcing mesh 611 may have a mesh size of considerably larger than the mesh screen 609 and provides robustness and protection for the mesh screen 609. The provision of two filtration elements 609 enables a greater robustness for the enclosure 603, which is beneficial when used in high tidal flow areas or when utilized in forming a full enclosure or when it forms or is used for the enclosure structure of a cage.

In an alternative embodiment of the system of Figure 5a, a fin fish (e.g. salmon) cultivation cage 700 is illustrated in Figure 7. Here, an enclosure 701 is again formed of a filtration screen enclosure (for inhibiting ingress of marine copepods, such as sea lice, and/or marine parasites or pests into the fish cultivation volume) comprising a filtration element having a pore size of 150 µm (or optionally up to 100 µm making it also effective in inhibiting ingress of algal blooms) and, optionally, on each side of the filtration element, a porous reinforcing element with an average pore size of greater than the filtration element. In this embodiment, the filtration screen enclosure forms a full enclosure. The cage 700 has a depth of 6 to 8 m and 50 m diameter. Since flow of water into and out of the enclosure 701 may be reduced due to the pore size of the mesh, a fresh supply of cold, oxygenated and preferably filtered sea water may be supplied to the cultivation volume via two oxygenated water supply pipes 717, the outlets 719 of which may be disposed at a depth of say 2 to 5 m within the enclosure 701 and configured to cause a circulatory movement or flow within the enclosure 700. The water supply pipes 717 each extend over the cage rim 739 and to a depth of about 10 to 15 m to connect to submersed water pumps 735 which are disposed on stanchions 737 or other support members suspended from the cage rim 739 (e.g. floating HDPE pipes). Cold, oxygenated water is drawn from the surrounding sea through inlets 729 and pass through a filter, e.g. of 100 µm, located for example in each of the pumps 735. The pumps 735 may, for example, be 50 horsepower and capable of delivering about 10,000 litres per minute of filtered cold water into the cage. Water may simply flow out through the porous enclosure 701 (and indeed can flow in too). Again, waste 725 can collect in the bottom of the enclosure 701 for later removal (e.g. by pumping away).

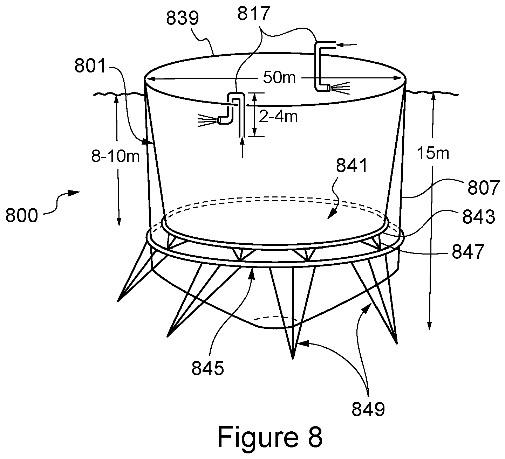

In one particular embodiment of the invention shown in Figure 8, the fish cultivation system 800 has an external fish cultivation enclosure structure 807 of generally standard construction (e.g. polyester or polypropylene or other suitable netting) and an internal enclosure 801 comprising a water permeable and porous filtration screen enclosure comprising a filtration element of, for example, 100, 125 or 150 µm mesh size woven Nylon mesh, optionally sandwiched by two structurally supporting mesh layers. The internal enclosure 801 is disposed within the volume defined by the external enclosure structure 807 and may be a cylindrical or upturned truncated conical shape in which the side is provided by the filtration element and a base 841 is provided of tarpaulin or also formed from the filtration element construction. The sides and base 841 of the internal enclosure 801 may be defined by a weighted (e.g. sand-filled) HDPE pipe 843 disposed about the circumference about the interior of the internal enclosure 801. The internal enclosure may extend to a depth of about 8 to 10 m.

The external enclosure 807, which has a diameter of about 50 m and extends to a depth of about 15 m may be adapted with a circumferential HDPE pipe collar 845 disposed typically about the exterior of the external enclosure 807 and secured to the netting thereof. The external enclosure 807 may be provided with additional anchors 849 to secure it to the seabed (in addition to the conventional moorings). The internal enclosure 801 is secured to the external enclosure 807 by securing to a circumferential HDPE pipe defining the rim 839 and the weight HDPE pipe 843 may be secured to the circumferential collar 845 via securing anchors 847.

Should the base 841 be provided as a tarpaulin, it may be secured to the weighted pipe 843 via sewn in polyester or polypropylene loops. A tarpaulin base may be effective in improving the collection of waste from the aquaculture system.

The internal enclosure 801 may be raised from the aquaculture system and inspected or repaired periodically (to ensure it maintains its integrity and continues to serve to minimise sea lice larvae ingress into the enclosure).

The aquaculture system 800 according to this embodiment may be provided with oxygenated water supply pipes 817 with cold (filtered) seawater pumped in from about 15 depth and delivered via pipes 817 to within the internal enclosure 801 at a depth of from 2 to 4 m (and preferably in a way to cause some circulation of water in the enclosure volume).

### EXAMPLES

### Example 1

Test chambers to assess the effectiveness in inhibiting passage of lice larvae through a mesh screen were set up using a circle of mesh glued across an open end of a section of 15 cm pipe, modified to enable suspension from the rims of 2.5 litre buckets, with the mesh submerged.

The mesh screens used were samples of mesh of different pore size/material. The mesh screens are formed of monofilament synthetic fibres (of polyamide or polyester), having warp and weft monofilament fibres of equal thread density, are detailed in Table 1:

**Table 1**

| **Screen sample** | **Mesh size/ µm** | **Material** | **Threads/inch** | **Wt (oz/yd²)** | **Thickness (in)** | **Open area (%)** |
|---|---|---|---|---|---|---|
| **A** | 100 | Nylon 6 | 155 | 1.4 | 0.004 | 37 |
| **B** | 150 | Nylon 6 | 100 | 2.4 | 0.006 | 36 |
| **C** | 200 | Nylon 6 | 75 | 3 | 0.008 | 38 |
| **D** | 200 | Polyester | 80 | 2.2 | 0.006 | 41 |
| **E** | 250 | Nylon 6 | 62 | 3.2 | 0.01 | 39 |
| **F** | 300 | Nylon 6 | 56 | | 0.01 | 44 |

Six 2.5 litre buckets were provided with 1.5 litres of filtered, salmon-conditioned sea water (expected to contain traces of salmon pheromones and kairomones as an activation signal for *Lepeoptheirus salmonis (L.salmonis)* lice larvae.

Batches of approximately 100 one day post hatch *L.salmonis* nauplii (from ovigerous females) were counted into 250 mL beakers. The beaker was topped up to 250 ml using filtered sea water.

The lice-containing water from each nauplii batch was poured into a respective test chamber disposed in the 2.5 litre bucket and the beakers rinsed into the test chambers with sea water. After 30 minutes, the test chambers were lifted out of the water and the outer surfaces rinsed gently into the 2.5 litre buckets. The water remaining in the 2.5 litre buckets was concentrated and any lice that had passed through the mesh into the remaining water in the bucket were counted.

The results including % retention [being (total nauplii used - nauplii passed through)/total nauplii used *100] are set out in Table 2:

**Table 2**

| **Experiment** | **Mesh size/ µm** | **Material** | **Nauplii used** | **Nauplii passed through** | **% retention** |
|---|---|---|---|---|---|
| **A** | 100 | Nylon | 95 | 0 | 100 |
| **B** | 150 | Nylon | 103 | 0 | 100 |
| **C** | 200 | Nylon | 107 | 50 | 53 |
| **D** | 200 | Polyester | 99 | 22 | 78 |
| **E** | 250 | Nylon | 105 | 92 | 12 |
| **F** | 300 | Nylon | 106 | 67 | 37 |

As can be seen from the table, the screens having a mesh size of 100 µm (screen A) and 150 µm (screen B) prevented passage of all the lice larvae. The screens from experiment C and D each excluded greater than 50% of the lice larvae. Screens of mesh size 250 µm or greater (screens E and F) were largely ineffective at inhibiting lice larvae transport.

### Example 2

A 0.5 metre square sample of filtration screen assembly was prepared, which comprised a 150 µm woven nylon mesh screen (as defined in Example 1) and disposed on each side of the screen a relatively stiff polypropylene mesh of mesh size approximately 0.65 cm. The filtration screen assembly sample was clamped in a horizontal orientation 1 litre of water poured on top of the sample, through an area of 20 cm square. The water was observed to pass through the screen sample without any apparent resistance in less than 2 seconds, leaving no puddling on the surface of the sample.

### Example 3

A 2 m by 1.5 m sample of a filtration screen assembly used in Example 2 was prepared and held by two people, one at each end, in a vertical orientation in shallow waters in the sea, to face incoming waves on a beach. Despite heavy saves the screen sample was observed to be highly permeable to sea water and although there was some physical resistance in the heaviest waves, the sea water was observed to pass through easily. The structural integrity of the screen sample was unaffected by exposure to the breaking waves.

It is believed that this demonstrates that the filtration screen assembly is not unduly restrictive to passage of water and will thus enable effective oxygenation to fish cultivation enclosures in sea water.

### Example 4

A mesh covered, stainless steel framed enclosure (approx. 130 cm diameter x 65 cm deep) was provided for testing. The mesh size chosen for this study and used in the construction of the enclosure was 150 µm. The enclosure was suspended in a 3 meter diameter, 5500 L capacity, GRP tank and stocked to a density of approximately 15 kg / m3 with twenty Atlantic salmon averaging 370 g each. The enclosure was suspended to provide a working volume of 500 L.

A first test was carried out to assess the effect of the mesh enclosure on dissolved oxygen in the fish cultivation volume based upon passive flow conditions. The test started with the introduction of the fish into the enclosure with a normal water flow directed at the mesh above the surface, at a flow rate of 0.58 m/s.

Using an Oxyguard Handy Polaris oxygen meter, dissolved oxygen readings were taken from within the enclosure at five minute intervals for a duration of one hour. Table 3 below shows a gradual drop in dissolved oxygen over the sixty minutes from 9.6mg/L to 9.1 mg/L.

**Table 3 Oxygen concentration using above surface water supply at 0.58 m/s (~150 L/min), 11.0 °C**

| **Time (mins)** | **dO₂ (mg/L)** |
|---|---|
| 0 | 9.6 |
| 5 | 9.5 |
| 10 | 9.5 |
| 15 | 9.4 |
| 20 | 9.3 |
| 25 | 9.2 |
| 30 | 9.5 |
| 35 | 9.1 |
| 40 | 9.0 |
| 45 | 9.0 |
| 50 | 9.1 |
| 55 | 9.1 |
| 60 | 9.1 |

The same water flow was then directed at the mesh, but this time under the water surface and dissolved oxygen readings taken every five minutes from within the enclosure. Within ten minutes the dissolved oxygen had risen back up from 9.1 mg/L to 9.4 mg/L, where it held for a further twenty minutes. See Table 4 below.

**Table 4 Oxygen concentration using sub-surface water supply at 0.58 m/s (150 L/m), 11.0 °C**

| **Time (mins)** | **dO₂ (mg/L)** |
|---|---|
| 0 | 9.1 |
| 5 | 9.2 |
| 10 | 9.4 |
| 15 | 9.4 |
| 20 | 9.4 |
| 25 | 9.4 |
| 30 | 9.4 |

Following twenty minutes of no further decrease in dissolved oxygen level, a 90 degree elbow was fixed to the water inlet and a circular flow introduced around the outside of the test enclosure.

During this test the oxygen level dropped from 9.3 mg/L to 9.1 mg/L within the first ten minutes. It then held steady at 9.1 mg/L for a further 20 minutes. See Table 5 below.

**Table 5 Circular rotation at 0.58 m/s (150 L/m), 11.0 °C**

| **Time (mins)** | **dO₂ (mg/L)** |
|---|---|
| 35 | 9.3 |
| 40 | 9.2 |
| 45 | 9.1 |
| 50 | 9.1 |
| 55 | 9.1 |
| 60 | 9.1 |

For the third test, the water flow was reduced to 75 L/min with the flow directed at the enclosure as in the first test above.

Non-infectious, nauplius stage sea lice larvae were introduced from a bucket into the main tank, on the outside of the mesh enclosure. 900 nauplii were used.

With the fish acting as a chemoattractant, water samples were taken at regular intervals from within the enclosure, sieved through a 52 µm filter and the mesh examined for larvae.

From Table 6 below, it can be seen that at each time point over the course of five hours, no sea lice larvae were found in any of the water samples taken from within the mesh enclosure.

**Table 6 Water sampling and larvae counts**

| **Time (mins)** | **Volume of sample (mL)** | **Larvae counted** | **dO₂ (%)** |
|---|---|---|---|
| 0 | - | - | 92.4 |
| 10 | 5000 | 0 | 90.9 |
| 25 | 5000 | 0 | - |
| 40 | 5000 | 0 | - |
| 45 | 5000 | 0 | 84.7 |
| 50 | 5000 | 0 | O₂ added |
| 55 | 5000 | 0 | - |
| 85 | 5000 | 0 | - |
| 90 | 5000 | 0 | 108.4 |
| 97 | 5000 | 0 | 101.3 |
| 110 | 5000 | 0 | 98.5 |
| 115 | 5000 | 0 | 97.4 |
| 175 | 5000 | 0 | 107.3 * |
| 235 | 5000 | 0 | 107.6 |
| 295 | 5000 | 0 | 106.2 |

| | | | |
|---|---|---|---|
| *inflow moved to inside, top centre of enclosure to replenish water and dO_{2.} | | | |

With the increased activity associated with the collection of the water samples and possible increased stress to the fish, it was necessary to necessary to supplement the dissolved oxygen via an oxygen diffuser at 50mins, and with direct water flow at 175mins.

A 150 µm mesh enclosure appears to have been effective in preventing the passive movement of sea lice *(Lepeophtheirus salmonis)* nauplii into an enclosure stocked with Atlantic salmon.

The invention has been described with reference to a preferred embodiment. However, it will be appreciated that variations and modifications can be effected by a person of ordinary skill in the art without departing from the scope of the invention defined by the appended claims.

## Claims

1. A fish cultivation system (100, 800) defining a fish cultivation volume and comprising
a fish cultivation enclosure structure; and
a filtration screen enclosure (103, 501, 603, 701, 801) that entirely envelopes or encases, sub-surface,
the fish cultivation volume, the filtration screen enclosure for inhibiting ingress of marine copepods, such as sea lice, and/or marine parasites or pests into the fish cultivation volume,
the filtration screen enclosure consisting of: a filtration element (217, 317) having a pore size of up to 300 µm and at least 40 µm; wherein the filtration element comprises a plurality of filtration strip members (107, 207a, 207b, 307a, 307b) sewn together;
optionally a non-porous base; and optionally at least one porous reinforcing element with an average pore size of greater than the filtration element disposed on or in relation to one side of the filtration element.

2. A fish cultivation system as claimed in claim 1, wherein the filtration strip members overlap to form joins between adjacent filtration strip members in combination with a relatively narrow strip of a structurally reinforcing material.

3. A fish cultivation system as claimed in claim 2, wherein the joins comprise two strips of structurally reinforcing material, one disposed on each side of an overlapping portion of filtration strip members.

4. A fish cultivation system as claimed in claim 2, wherein the joins comprise three strips of structurally reinforcing material, one strip of the structurally reinforcing material interleaving two overlapping portions of the filtration strip members and one disposed on each side of the overlapping portion, wherein the three strips of structurally reinforcing material are preferably provided by a single reinforcing element bi-folded to provide the interleaving strip of reinforcing material and the strip on each side.

5. A fish cultivation system as claimed in any one of claims 2 to 4, wherein the structurally reinforcing material comprises a woven material, preferably a laminate of a woven material and a non-woven material.

6. A fish cultivation system as claimed in any one of the preceding claims, wherein the filtration strip members are arranged as a stack of cylindrical or truncated inverted conical members to form the filtration element or wherein the filtration strip members are arranged in a vertical configuration so that a plurality of strips arranged side-by-side sewn together define a cylindrical and/or truncated inverted conical shape.

7. A fish cultivation system as claimed in any one of the preceding claims, wherein the filtration screen enclosure consists of the filtration element and a non-porous base.

8. A fish cultivation system as claimed in any one of the preceding claims, wherein the filtration element has a pore size of from 75 to 175 µm.

9. A fish cultivation system as claimed in any one of the preceding claims, which is a salmon cultivation system.

10. A fish cultivation system as claimed in any one of claims 1 to 8, wherein the filtration screen enclosure is disposed in relation to the fish cultivation enclosure structure by being discrete and separate from the fish cultivation enclosure or by cooperating with the fish cultivation enclosure and being at least partially laminar therewith.

11. A filtration screen enclosure for a fish cultivation system, the filtration screen enclosure configured to define and enclose by entirely enveloping or encasing, sub-surface, a fish cultivation volume,
the filtration screen enclosure consisting of: a filtration element having a pore size of up to 300 µm and at least 40 µm; wherein the filtration element comprises a plurality of filtration strip members (107, 207a, 207b, 307a, 307b) sewn together;
optionally a non-porous base; and optionally at least one porous reinforcing element with an average pore size of greater than the filtration element disposed on or in relation to one side of the filtration element,
whereby ingress of marine copepods into the fish cultivation volume may be inhibited.

12. A filtration screen enclosure as claimed in claim 11, wherein the filtration element is as further defined in any one of claims 2 to 8.

13. A method of screening a fish cultivation enclosure, the method comprising providing a filtration screen enclosure as defined in claim 11 or claim 12 in relation to a fish cultivation enclosure.

14. A method of cultivating fish, the method comprising providing a fish cultivation enclosure having a filtration screen enclosure, as defined in claim 11 or claim 12, disposed in relation to the fish cultivation enclosure, to inhibit ingress of marine copepods into a fish cultivation volume.

## Patentansprüche

1. Fischzuchtsystem (100, 800), das ein Fischzuchtvolumen definiert und umfasst:
eine Fischzuchteinfassungsstruktur; und
eine Filtrationssiebeinfassung (103, 501, 603, 701, 801), die das Fischzuchtvolumen unter der Oberfläche vollständig umhüllt oder umschließt, wobei die Filtrationssiebeinfassung zum Unterbinden eines Eindringens von marinen Kopepoden, wie Seeläusen, und/oder marinen Parasiten oder Schädlingen in das Fischzuchtvolumen ist,
wobei die Filtrationssiebeinfassung besteht aus:
einem Filtrationselement (217, 317) mit einer Porengröße von bis zu 300 µm und mindestens 40 µm;
wobei das Filtrationselement eine Vielzahl von Filtrationsstreifenelementen (107, 207a, 207b, 307a, 307b) umfasst, die aneinander genäht sind;
optional einer nichtporösen Basis; und optional mindestens einem porösen Verstärkungselement mit einer durchschnittlichen Porengröße größer als das Filtrationselement, das auf einer oder in Bezug auf eine Seite des Filtrationselements angeordnet ist.

2. Fischzuchtsystem nach Anspruch 1, wobei die Filtrationsstreifenelemente überlappen, um Verbindungen zwischen benachbarten Filtrationsstreifenelementen in Kombination mit einem relativ schmalen Streifen aus einem Strukturverstärkungsmaterial zu bilden.

3. Fischzuchtsystem nach Anspruch 2, wobei die Verbindungen zwei Streifen aus Strukturverstärkungsmaterial umfassen, wobei einer auf jeder Seite eines überlappenden Abschnitts von Filtrationsstreifenelementen angeordnet ist.

4. Fischzuchtsystem nach Anspruch 2, wobei die Verbindungen drei Streifen aus Strukturverstärkungsmaterial umfassen, wobei ein Streifen aus dem Strukturverstärkungsmaterial zwei überlappende Abschnitte der Filtrationsstreifenelemente verschachtelt und einer auf jeder Seite des überlappenden Abschnitts angeordnet ist, wobei die drei Streifen aus Strukturverstärkungsmaterial vorzugsweise durch ein einziges Verstärkungselement bereitgestellt werden, das doppelt gefalzt ist, um den verschachtelnden Streifen aus Verstärkungsmaterial und den Streifen auf jeder Seite bereitzustellen.

5. Fischzuchtsystem nach einem der Ansprüche 2 bis 4, wobei das Strukturverstärkungsmaterial ein Gewebematerial, vorzugsweise ein Laminat aus einem Gewebematerial und einem Vliesmaterial umfasst.

6. Fischzuchtsystem nach einem der vorhergehenden Ansprüche, wobei die Filtrationsstreifenelemente als ein Stapel von zylindrischen oder gestutzten invertierten konischen Elementen eingerichtet sind, um das Filtrationselement zu bilden, oder wobei die Filtrationsstreifenelemente in einer vertikalen Konfiguration eingerichtet sind, so dass eine Vielzahl von Streifen, die nebeneinander eingerichtet sind, aneinander genäht eine zylindrische und/oder gestutzte invertierte konische Form definieren.

7. Fischzuchtsystem nach einem der vorhergehenden Ansprüche, wobei die Filtrationssiebeinfassung aus dem Filtrationselement und einer nichtporösen Basis besteht.

8. Fischzuchtsystem nach einem der vorhergehenden Ansprüche, wobei das Filtrationselement eine Porengröße von 75 bis 175 µm aufweist.

9. Fischzuchtsystem nach einem der vorhergehenden Ansprüche, das ein Lachszuchtsystem ist.

10. Fischzuchtsystem nach einem der Ansprüche 1 bis 8, wobei die Filtrationssiebeinfassung in Bezug auf die Fischzuchteinfassungsstruktur angeordnet ist, indem sie von der Fischzuchteinfassung eigenständig und getrennt ist oder indem sie mit der Fischzuchteinfassung zusammenwirkt und zumindest partiell laminar damit ist.

11. Filtrationssiebeinfassung für ein Fischzuchtsystem, wobei die Filtrationssiebeinfassung dazu konfiguriert ist, ein Fischzuchtvolumen durch vollständiges Umhüllen oder Umschließen dieses unter der Oberfläche zu definieren und einzufassen,
wobei die Filtrationssiebeinfassung besteht aus: einem Filtrationselement mit einer Porengröße von bis zu 300 µm und mindestens 40 µm; wobei das Filtrationselement eine Vielzahl von Filtrationsstreifenelementen (107, 207a, 207b, 307a, 307b) umfasst, die aneinander genäht sind;
optional einer nichtporösen Basis; und optional mindestens einem porösen Verstärkungselement mit einer durchschnittlichen Porengröße größer als das Filtrationselement, das auf einer oder in Bezug auf eine Seite des Filtrationselements angeordnet ist,
wodurch ein Eindringen von marinen Kopepoden in das Fischzuchtvolumen unterbunden werden kann.

12. Filtrationssiebeinfassung nach Anspruch 11, wobei das Filtrationselement wie ferner in einem der Ansprüche 2 bis 8 definiert ist.

13. Verfahren zum Durchsieben einer Fischzuchteinfassung, wobei das Verfahren eine wie in Anspruch 11 oder Anspruch 12 definierte Filtrationssiebeinfassung in Bezug auf eine Fischzuchteinfassung bereitstellt.

14. Verfahren zum Züchten von Fischen, wobei das Verfahren ein Versehen einer Fischzuchteinfassung mit einer wie in Anspruch 11 oder Anspruch 12 definierten Filtrationssiebeinfassung umfasst, die in Bezug auf die Fischzuchteinfassung angeordnet wird, um ein Eindringen von marinen Kopepoden in ein Fischzuchtvolumen zu unterbinden.

## Revendications

1. Système d'élevage de poissons (100, 800) définissant un volume d'élevage de poissons et comprenant
une structure d'enceinte d'élevage de poissons ; et
une enceinte de tamis de filtration (103, 501, 603, 701, 801) qui enveloppe ou enferme entièrement, en sous-surface, le volume d'élevage de poissons, l'enceinte de tamis de filtration étant destinée à inhiber l'entrée de copépodes marins, tels que des poux de mer, et/ou des parasites marins ou des organismes nuisibles dans le volume d'élevage de poissons,
l'enceinte de tamis de filtration étant constituée par : un élément de filtration (217, 317) présentant une taille de pores allant jusqu'à 300 µm et d'au moins 40 µm ; dans lequel l'élément de filtration comprend une pluralité d'éléments de bande de filtration (107, 207a, 207b, 307a, 307b) cousus ensemble ;
optionnellement, une base non-poreuse ; et optionnellement, au moins un élément de renfort poreux avec une taille de pores moyenne plus grande que l'élément de filtration disposé sur ou par rapport à un côté de l'élément de filtration.

2. Système d'élevage de poissons selon la revendication 1, dans lequel les éléments de bande de filtration se chevauchent pour former des jointures entre des éléments de bande de filtration adjacents en combinaison avec une bande relativement étroite d'un matériau de renfort structurel.

3. Système d'élevage de poissons selon la revendication 2, dans lequel les jointures comprennent deux bandes de matériau de renfort structurel, l'une disposée sur chaque côté d'une partie de chevauchement d'éléments de bande de filtration.

4. Système d'élevage de poissons selon la revendication 2, dans lequel les jointures comprennent trois bandes de matériau de renfort structurel, une bande du matériau de renfort structurel s'entrelaçant avec deux parties de chevauchement des éléments de bande de filtration et l'une étant disposée sur chaque côté de la partie de chevauchement, dans lequel les trois bandes de matériau de renfort structurel sont de préférence pourvues d'un seul élément de renfort plié en deux de façon à présenter la bande entrelacée de matériau de renfort et la bande sur chaque côté.

5. Système d'élevage de poissons selon l'une quelconque des revendications 2 à 4, dans lequel le matériau de renfort structurel comprend un matériau tissé, de préférence un stratifié d'un matériau tissé et d'un matériau non-tissé.

6. Système d'élevage de poissons selon l'une quelconque des revendications précédentes, dans lequel les éléments de bande de filtration sont agencés comme une pile d'éléments cylindriques ou tronconiques inversés pour former l'élément de filtration ou dans lequel les éléments de bande de filtration sont agencés selon une configuration verticale de sorte qu'une pluralité de bandes agencées côte-à-côte et cousues ensemble définissent une forme cylindrique et/ou tronconique inversée.

7. Système d'élevage de poissons selon l'une quelconque des revendications précédentes, dans lequel l'enceinte de tamis de filtration est constituée par l'élément de filtration et une base non-poreuse.

8. Système d'élevage de poissons selon l'une quelconque des revendications précédentes, dans lequel l'élément de filtration présente une taille de pores allant de 75 à 175 µm.

9. Système d'élevage de poissons selon l'une quelconque des revendications précédentes, qui est un système d'élevage de saumon.

10. Système d'élevage de poissons selon l'une quelconque des revendications 1 à 8, dans lequel l'enceinte de tamis de filtration est disposée par rapport à une structure d'enceinte d'élevage de poissons en étant distincte et séparée de l'enceinte d'élevage de poissons ou en coopérant avec l'enceinte d'élevage de poissons et en étant lamellée au moins partiellement avec celle-ci.

11. Enceinte de tamis de filtration pour un système d'élevage de poissons, l'enceinte de tamis de filtration étant configurée pour définir et renfermer en enveloppant ou enfermant entièrement, en sous-surface, un volume d'élevage de poissons,
l'enceinte de tamis de filtration étant constituée par : un élément de filtration présentant une taille de pores allant jusqu'à 300 µm et d'au moins 40 µm ; dans laquelle l'élément de filtration comprend une pluralité d'éléments de bande de filtration (107, 207a, 207b, 307a, 307b) cousus ensemble ;
optionnellement, une base non-poreuse ; et optionnellement au moins un élément de renfort poreux avec une taille de pores moyenne plus grande que l'élément de filtration disposé sur ou par rapport à un côté de l'élément de filtration,
moyennant quoi l'entrée de copépodes marins dans le volume d'élevage de poissons peut être inhibée.

12. Enceinte de tamis de filtration selon la revendication 11, dans laquelle l'élément de filtration est comme défini en outre dans l'une quelconque des revendications 2 à 8.

13. Procédé de tamisage d'une enceinte d'élevage de poissons, le procédé comprenant la fourniture d'une enceinte de tamis de filtration comme définie dans la revendication 11 ou la revendication 12 par rapport à une enceinte d'élevage de poissons.

14. Procédé d'élevage de poissons, le procédé comprenant la fourniture d'une enceinte d'élevage de poissons présentant une enceinte de tamis de filtration, comme définie dans la revendication 11 ou la revendication 12, disposée par rapport à l'enceinte d'élevage de poissons, pour inhiber l'entrée de copépodes marins dans un volume d'élevage de poissons.
